# EUROPEAN PATENT APPLICATION

(11) **EP 3 396 389 A1**
(43) Date of publication of application: **31.10.2018**
(21) Application number: 16878380.1
(22) Date of filing: 08.12.2016
(51) Int. Cl.: G01N 35/10

(54) **AUTOMATED ANALYSIS DEVICE AND AUTOMATED ANALYSIS METHOD**

(30) Priority: 25.12.2015 JP 2015254876
(71) Applicant: Jeol Ltd., Akishima-shi, Tokyo 196-8558 (JP)
(72) Inventor: MURANAKA Takeshi, Akishima-shi Tokyo 196-8558 (JP); NAKAMURA Mizuki, Akishima-shi Tokyo 196-8558 (JP); OGURI Kazuyuki, Tokyo 163-0410 (JP); ISHIHARA Narihito, Tokyo 163-0410 (JP)
(74) Representative: Boult Wade Tennant LLP
(86) International application number: PCT/JP2016/086499
(87) International publication number: WO 2017/110488

(57) **Abstract**

An automatic analyzer provided with a probe provided with an opening end for discharging a dispensing liquid, a pump connected to a side opposite to the opening end of the probe, and a dispensing mechanism provided with a drive control unit which controls drive of the pump, in which the drive control unit controls the drive of the pump to realize a discharging speed at which a droplet of the dispensing liquid is formed at the opening end of the probe at an initial stage of discharge drive and a discharging speed at which a liquid column of the dispensing liquid is formed at the opening end of the probe at a later stage of the discharge drive at the time of the discharge drive of the pump to discharge a predetermined amount of dispensing liquid into a dispensing container from the opening end of the probe.

## Description

### Technical Field

The present invention relates to an automatic analyzer and an automatic analyzing method, and in particular relates to an automatic analyzer provided with a dispensing mechanism and an automatic analyzing method using the same.

### Background Art

As an automatic analyzer, a biochemical analyzer which analyzes biological components contained in a specimen such as blood or urine is known. Such automatic analyzer includes a dispensing mechanism which dispenses a specimen to be analyzed and a reagent for analysis into a dispensing container by a predetermined amount, and various types of drive control for improving dispensing accuracy are performed.

As an example, a configuration is disclosed in which dispensing is performed at a discharging speed higher than the speed at which a droplet is formed in a state in which a space between a height position of a bottom surface of a receptacle or a liquid level in the receptacle and a position at a distal end of a nozzle is made smaller than the droplet formed at the distal end of the nozzle. It is said that splash of a liquid specimen is prevented and contamination at the time of dispensing operation is reduce by this (refer to following Patent Literature 1). Also, disclosed is a configuration of discharging the liquid specimen in a time-division manner at each dispensing and making a final discharge amount constant, and changing the above-described discharging speed on the basis of a relationship between a discharging speed and a discharge amount for keeping a liquid level position of the liquid specimen in a suction holding unit constant at every dispensing time. It is said that accuracy of the discharge amount of the liquid specimen is improved by this (refer to following Patent Literature 2).

### Citation List

### Patent Literature

Patent Literature 1: JP 2001-242183 A
Patent Literature 2: JP 6-341999 A

### Summary of Invention

### Technical Problem

However, in the configuration of Patent Literature 1, it is difficult to control the distal end of the nozzle in a case where contents are accommodated in the container, and in a case where a dispensing amount is large, the distal end of the nozzle might be brought into contact with the dispensed liquid. Also, in a configuration of Patent Literature 2, it is not possible to prevent splash of a dispensed reagent.

Therefore, it is an object of the present invention to provide an automatic analyzer and an automatic analyzing method capable of preventing splash of a chemical liquid in a dispensing container while securing a dispensing speed, thereby satisfying both an increase in analysis speed and improvement in analysis accuracy.

### Solution to Problem

An automatic analyzer according to the present invention for achieving such an object is an automatic analyzer provided with a probe provided with an opening end for discharging a dispensing liquid, a pump connected to a side opposite to the opening end of the probe, and a dispensing mechanism provided with a drive control unit which controls drive of the pump, in which the drive control unit controls the drive of the pump to realize a discharging speed at which a droplet of the dispensing liquid is formed at the opening end of the probe at an initial stage of discharge drive and a discharging speed at which a liquid column of the dispensing liquid is formed at the opening end of the probe at a later stage of the discharge drive at the time of the discharge drive of the pump to discharge a predetermined amount of dispensing liquid into a dispensing container from the opening end of the probe. The present invention is also an automatic analyzing method using such automatic analyzer.

### Advantageous Effects of Invention

According to the automatic analyzer and the automatic analyzing method of the present invention having the above-described configuration, it is possible to prevent the splash of the chemical liquid while securing the dispensing speed, thereby satisfying both an increase in the analysis speed and improvement of the analysis accuracy.

### Brief Description of Drawings

Fig. 1 is a configuration diagram of a dispensing mechanism according to a first embodiment and a second embodiment.
Fig. 2 is a flowchart illustrating a dispensing operation in the dispensing mechanism according to the first embodiment.
Fig. 3 is a view illustrating steps S101 and S102 of a dispensing procedure according to the first embodiment.
Fig. 4 is a view for illustrating step S103 of the dispensing procedure according to the first embodiment.
Fig. 5 is a view for illustrating steps S104 and S105 of the dispensing procedure according to the first embodiment.
Fig. 6 is a view for illustrating step S106 of the dispensing procedure according to the first embodiment.
Fig. 7 is a view for illustrating step S107 of the dispensing procedure according to the first embodiment.
Fig. 8 is a view for illustrating step S108 of the dispensing procedure according to the first embodiment.
Fig. 9 is a flowchart illustrating drive of a dispensing mechanism according to a second embodiment.
Fig. 10 is a view for illustrating step S201 of the dispensing procedure according to the second embodiment.
Fig. 11 is a view for illustrating step S207 of the dispensing procedure according to the second embodiment.
Fig. 12 is a configuration diagram of a dispensing mechanism of a variation.
Fig. 13 is a schematic configuration diagram illustrating an automatic analyzer according to an embodiment.

### Description of Embodiments

Hereinafter, each embodiment of a dispensing mechanism provided in an automatic analyzer of the present invention and a configuration of the automatic analyzer of the present invention provided with the dispensing mechanism of each embodiment are described in this order with reference to the drawings.

### << First Embodiment >>

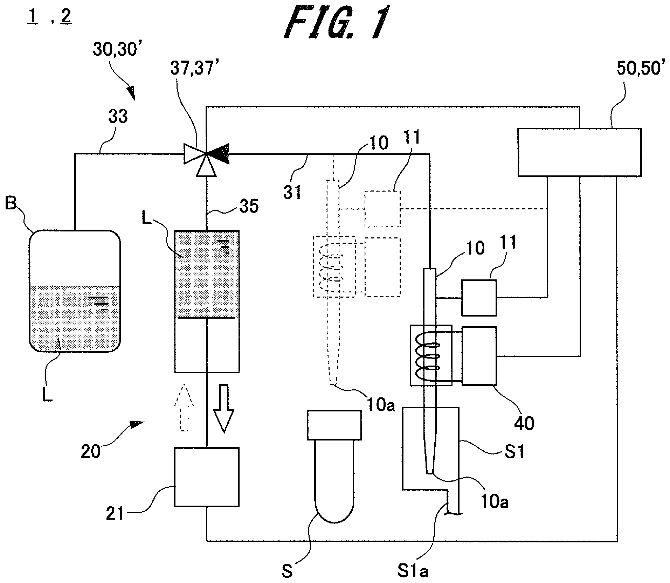

Fig. 1 is a configuration diagram of a dispensing mechanism according to a first embodiment. A dispensing mechanism 1 illustrated in this drawing is provided in an automatic analyzer and is provided with a probe 10, a pump 20, a piping system 30, a heater 40, and a drive control unit 50. Also, the dispensing mechanism 1 includes a cleaning tank S1 which cleans the probe 10. Each of the components is hereinafter described in detail.

### <Probe 10>

The probe 10 is a tubular body with one end configured as an opening end 10a for discharging a dispensing liquid L; this may have a shape in which an opening diameter of the tubular body is gradually reduced toward the opening end 10a. Also, the probe 10 is formed to have a certain length so as to enable insertion of the opening end 10a deep into a dispensing container S to which the dispensing liquid L is discharged and the cleaning tank S1, and is arranged in the automatic analyzer while maintaining a flow path of the tubular body vertical.

Such probe 10 is provided with a moving mechanism 11 by which the probe 10 may be moved between a discharging position of the dispensing liquid L and a cleaning position of the probe 10.

Herein, the discharging position of the dispensing liquid L is a position at which the dispensing liquid L is discharged into the dispensing container S from the opening end 10a of the probe 10, the position above a position in which the dispensing container S is arranged in the automatic analyzer. Also, the cleaning position of the probe 10 is a position at which the opening end 10a of the probe 10 is cleaned. The cleaning position of the probe 10 is a position in which the opening end 10a of the probe 10 is inserted into the cleaning tank S1 arranged in the automatic analyzer. Meanwhile, when the probe 10 is periodically cleaned, the cleaning tank S1 is filled with a cleaning solution. Also, a discharge port S1a for discharging the cleaning solution is provided on a lower end of the cleaning tank S1.

Such moving mechanism 11 is provided with, for example, an arm which freely moves up and down in a vertical direction and rotates about a vertical line passing through a base end thereof as a central axis, and a holding unit for holding the probe 10 provided at a distal end of the arm. The moving mechanism 11 is connected to a drive control unit 50 to be described later and moves the probe 10 according to an instruction from the drive control unit 50.

### <Pump 20>

The pump 20 is configured to suck and discharge the dispensing liquid L to be discharged from the probe 10, and may be a pump such as a diaphragm pump and a Perista pump (registered trademark) other than an illustrated syringe pump, for example. Such pump 20 is connected to a side opposite to the opening end 10a of the probe 10 via the piping system 30 to be described hereinafter and further connected to a supply bottle B of the dispensing liquid L. A driving unit 21 of the pump 20 is connected to the drive control unit 50 to be described later, and the suction and discharge of the dispensing liquid L are controlled according to an instruction from the drive control unit 50.

### <Piping system 30>

The piping system 30 is provided with a discharge pipe 31, a suction pipe 33, a common pipe 35, and an opening/closing valve 37. Among them, the discharge pipe 31 is a pipe one end of which is connected to the pump 20 via the common pipe 35 and the other end of which is connected to the side opposite to the opening end 10a of the probe 10. On the other hand, the suction pipe 33 is a pipe one end of which is connected to the pump 20 via the common pipe 35 and the other end of which is connected to the supply bottle B of the dispensing liquid L.

The opening/closing valve 37 switches an open state between the discharge and suction pipes 31 and 33 and the common pipe 35. Herein, for example, a three-way valve is used. The three-way valve is, for example, an electromagnetic valve which always closes the discharge pipe 31 as a normally closed pipe and always opens the suction pipe 33 as a normally opened pipe. As illustrated in Fig. 1, in a non-energized state, the opening/closing valve 37 closes a connection port on the discharge pipe 31 side to block communication between the pump 20 and the probe 10 and opens a connection port on the suction pipe 33 side to open the connection between the supply bottle B and the pump 20. At that time, a connection port on the common pipe 35 side is in a normally opened state. Meanwhile, in the drawing, among the three-way connection ports of the opening/closing valve 37, the closed connection port is indicated in black, and the open connection port is indicated in white.

The opening/closing valve 37 as described above is connected to the drive control unit 50 to be described later, and switches an open state of the discharge pipe 31 and the suction pipe 33 according to the instruction from the drive control unit 50.

### <Heater 40>

The heater 40 configured to heat the dispensing liquid L discharged from the probe 10 is provided around the probe 10. Such heater 40 is connected to the drive control unit 50 to be described later and heats the probe 10 according to the instruction from the drive control unit 50. Meanwhile, the heater 40 is not limited to be provided on the probe 10, and this may also be provided on the discharge pipe 31.

### <Drive Control Unit 50>

The drive control unit 50 is connected to the moving mechanism 11 provided on the probe 10, the driving unit 21 of the pump 20, the opening/closing valve 37 of the piping system 30, and the heater 40, and controls drive thereof. Such drive control unit 50 is provided with a central processing unit (CPU), a random access memory (RAM), and a read only memory (ROM) not herein illustrated, and controls drive of each unit according to a processing program of dispensing operation for the automatic analyzer set in advance. Details of the dispensing operation executed by such drive control unit 50 are as follows.

### <Dispensing Operation>

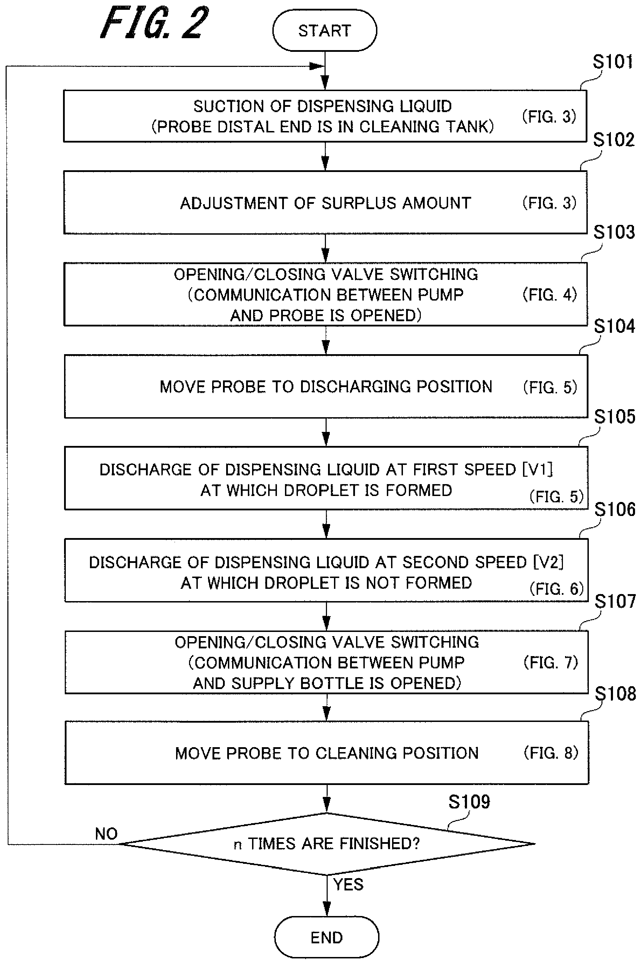

Fig. 2 is a flowchart illustrating the dispensing operation in the dispensing mechanism 1 according to the first embodiment. Hereinafter, a procedure of the dispensing operation performed in the dispensing mechanism 1 is described according to a flowchart of Fig. 2 and with reference to other necessary drawings. This flow is realized by the CPU forming the drive control unit 50 executing the program recorded in the ROM.

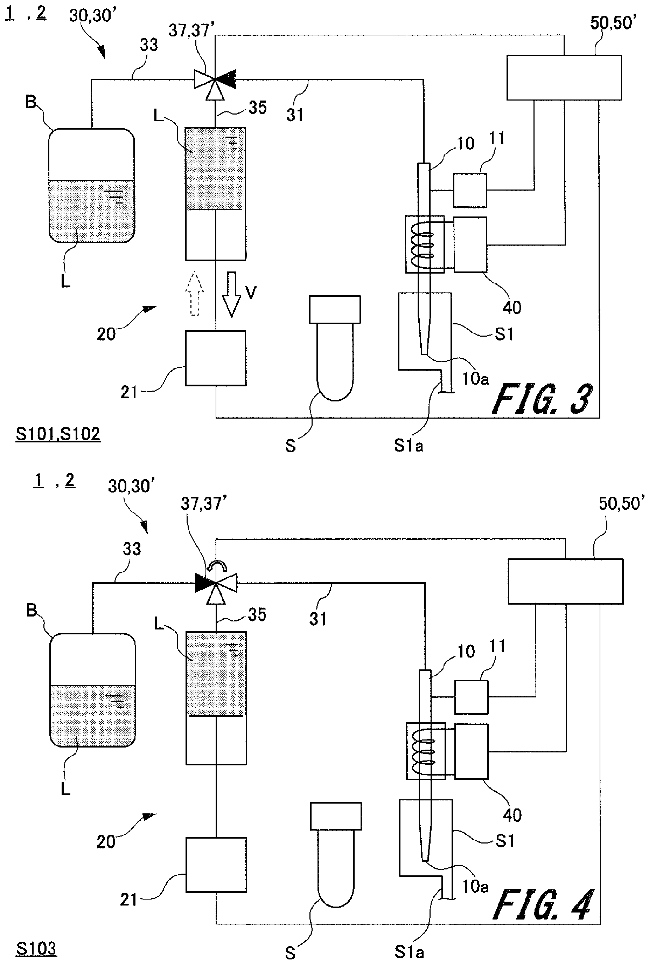

### [Step S101 (Refer to Fig. 3)]

First, at step S101, the dispensing liquid L is sucked from the supply bottle B of the dispensing liquid L to the pump 20. At that time, at the time when previous dispensing operation is finished, the probe 10 is arranged at the cleaning position by the moving mechanism 11, more specifically, the opening end 10a of the probe 10 is inserted into the cleaning tank S1. In addition, by driving the opening/closing valve 37, the discharge pipe 31 is closed and the communication between the pump 20 and the probe 10 is blocked, and the suction pipe 33 is opened and the communication between the pump 20 and the supply bottle B is opened.

In the above-described state, a predetermined amount of dispensing liquid L is sucked into the pump 20 from the supply bottle B via the suction pipe 33 by suction drive of the pump 20. At that time, the amount of the dispensing liquid L to be sucked into the pump 20 is an amount obtained by summing a total amount of the dispensing liquid L to be discharged into the dispensing container S by the discharge drive of the pump 20 to be hereinafter performed and a surplus amount in consideration of backlash of the pump 20. In addition, a suction speed [V] of the dispensing liquid L in this suction drive is not particularly limited, and this may be a constant suction speed as long as this is a speed at which it may reach with acceleration which may prevent generation of air bubbles due to cavitation.

### [Step S102 (Refer to Fig. 3)]

Next, at step S102, the surplus amount of the dispensing liquid L is adjusted. Herein, in consideration of the backlash of the pump 20 accompanying the switching from the suction drive of the pump 20 performed at previous step S101 to discharge drive of the pump 20 to be performed later, the pump 20 is switched to the discharge drive, and the surplus amount out of the dispensing liquid L sucked to the pump 20 is returned back to the supply bottle B side. As a result, the amount of the dispensing liquid L in the pump 20 is made the same as the total amount of the dispensing liquid L to be discharged into the dispensing container S.

### [Step S103 (Refer to Fig. 4)]

Next, at step S103, by switching the opening/closing valve 37, the discharge pipe 31 is opened and the communication between the pump 20 and the probe 10 is opened. As a result, the suction pipe 33 is closed to block the communication between the pump 20 and the supply bottle B.

Meanwhile, step S102 described above may also be performed after such step S103. In this case, the surplus amount of the dispensing liquid L is discharged into the cleaning tank S1.

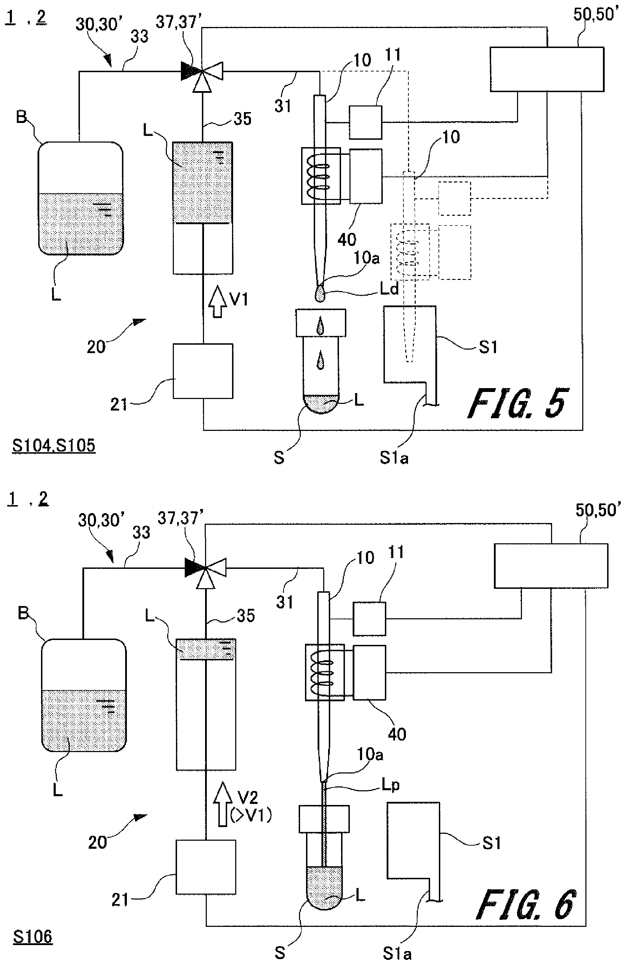

### [Step S104 (Refer to Fig. 5)]

Next, at step S104, the probe 10 is moved from the cleaning position to the discharging position of the dispensing liquid L by driving the moving mechanism 11. More specifically, the opening end 10a of the probe 10 is pulled up from the inside of the cleaning tank S1 and moved to the discharging position above the dispensing container S arranged at a predetermined position.

### [Step S105 (Refer to Fig. 5)]

Thereafter, at step S105, the dispensing liquid L in the pump 20 is discharged into the dispensing container S from the opening end 10a of the probe 10at an initial discharging speed [V1] at which a droplet Ld of the dispensing liquid L is formed at the opening end 10a of the probe 10 by the discharge drive of the pump 20. At that time, the heater 40 is turned on, and the dispensing liquid L is heated to be discharged.

Herein, it is sufficient that the initial discharging speed [V1] is such that the droplet Ld of the dispensing liquid L is formed at the opening end 10a, whereby the dispensing liquid L dropped into the dispensing container S is dispensed with splash of the dispensing liquid L by colliding with an inner wall of the dispensing container S prevented. However, the initial discharging speed [V1] is preferably as high as possible within a range in which the droplet Ld of the dispensing liquid L is formed at the opening end 1a in order to accelerate single dispensing operation. Such initial discharging speed [V1] is appropriately adjusted according to the opening diameter of the opening end 10a of the probe 10 and viscosity of the dispensing liquid L.

In addition, a discharge amount of the dispensing liquid L at the initial discharging speed [V1] as described above is sufficient for preventing the splash of the dispensing liquid L in the dispensing container S at the time of discharge of the dispensing liquid L at a later discharging speed [V2] performed at next step.

Therefore, when the total amount of the dispensing liquid L to be discharged into the dispensing container S is small, the discharge amount of the dispensing liquid L at the initial discharging speed [V1] is set to be equal to or larger than the discharge amount at the later discharging speed [V2] performed at next step, for example. Herein, as described above, since the amount of the dispensing liquid L in the pump 20 is made the same as the total amount of the dispensing liquid L to be discharged into the dispensing container S, the discharge amount of the dispensing liquid at the initial discharging speed [V1] is equal to or larger than a half the total amount of the dispensing liquid L in the pump 20. As a result, the dispensing liquid L of an amount sufficient for preventing the splash of the dispensing liquid L in the dispensing container S at the time of the discharge of the dispensing liquid L at the later discharging speed [V2] performed at next step may be retained in the dispensing container S.

On the other hand, in a case where the total amount of the dispensing liquid L to be discharged into the dispensing container S is large, the discharge amount of the dispensing liquid L at the initial discharging speed [V1] may be set to be equal to or smaller than the discharge amount at the later discharging speed [V2] performed at next step. Herein, this is an amount smaller than the half the total amount of the dispensing liquid L in the pump 20. As a result, it is possible to accelerate single dispensing operation by increasing the discharge amount of the dispensing liquid L at the later discharging speed [V2] (>[V1]) performed at next step while accumulating the dispensing liquid L of the sufficient amount in dispensing container S at the initial discharging speed [V1].

As described above, the discharge amount of the dispensing liquid L at the initial discharging speed [V1] is appropriately determined by the total amount of the dispensing liquid L to be discharged into the dispensing container S and a scattering property of the dispensing liquid L in the dispensing container S, that is, viscosity of the dispensing liquid L at the time of discharge into the dispensing container S.

### [Step S106 (Refer to Fig. 6)]

Next, at step S106, the dispensing liquid L in the pump 20 is discharged into the dispensing container S from the opening end 10a of the probe 10 at the later discharging speed [V2] (>[V1]) at which a liquid column Lp of the dispensing liquid L is formed at the opening end 10a of the probe 10 by the discharge drive of the pump 20. At that time, the heater 40 is turned on, and the dispensing liquid L is heated to be discharged.

Herein, the later discharging speed [V2] is the speed at which the droplet Lp of the dispensing liquid L is formed at the opening end 10a, the speed higher than the initial discharging speed [V1]. As a result, the dispensing of the dispensing liquid L at a speed higher than that at previous step S105 may be performed, thereby accelerating single dispensing operation. Furthermore, since the sufficient amount of dispensing liquid L discharged at previous step S105 and accumulated in the dispensing container S becomes a cushion, the splash of the dispensing liquid L discharged at the later discharging speed [V2] is prevented. Such later discharging speed [V2] is appropriately adjusted according to the opening diameter of the opening end 10a of the probe 10 and the viscosity of the dispensing liquid L, but this is preferably set to 2.5 to 3 times the initial discharging speed [V1].

At that time, the discharge amount of the dispensing liquid L at the later discharging speed [V2] as described above is an amount obtained by subtracting the discharge amount at previous step S105 from the total amount of the dispensing liquid L discharged into the dispensing container S. Herein, at step S102, since the amount of the dispensing liquid L in the pump 20 is made the same as the total amount of the dispensing liquid L to be discharged into the dispensing container S, the total amount of the dispensing liquid L remained in the pump 20 after step S105 is the discharge amount of the dispensing liquid L at the later discharging speed [V2].

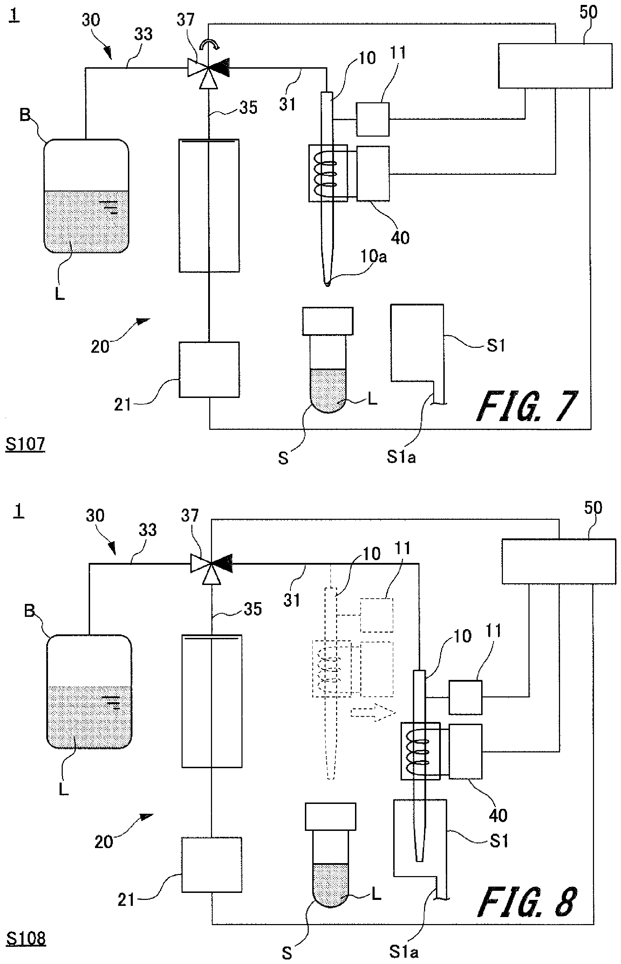

### [Step S107 (Refer to Fig. 7)]

Thereafter, at step S107, after finishing the discharge of the dispensing liquid L at step S106, by switching the opening/closing valve 37, the discharge pipe 31 is closed and the communication between the pump 20 and the probe 10 is blocked. As a result, the suction pipe 33 is opened and the communication between the pump 20 and the supply bottle B is opened. Meanwhile, in a state in which the discharge of the dispensing liquid L is finished at step S106, the droplet Ld of the dispensing liquid L is left at the opening end 10a of the probe 10. However, since the discharge of the dispensing liquid L is finished by the discharge at the later discharging speed [V2] (> [V1]), the remaining liquid droplet Ld is small.

### [Step S108 (Refer to Fig. 8)]

Thereafter, at step S108, the probe 10 is moved from the discharging position of the dispensing liquid L to the cleaning position by driving the moving mechanism 11. More specifically, the probe 10 is moved from the discharging position above the dispensing container S and the opening end 10a of the probe 10 is inserted into the cleaning tank S1. By this, single dispensing operation is finished.

### [Step S109]

Next, at step S109, it is determined whether preset n times of dispensing end. In a case where it is determined that n times of dispensing end (YES), a series of dispensing operations is finished. On the other hand, in a case where it is determined that n times of dispensing are not finished (NO), the procedure returns to step S101 and subsequent steps are repeated. Meanwhile, in this repetition, operation of exchanging the dispensing container S arranged at the discharging position with a new dispensing container S is performed.

### <Effect of First Embodiment>

In the first embodiment described above, the discharge drive of the pump 20 in single dispensing operation is divided into an initial stage at the discharging speed [V1] and a later stage at the discharging speed [V2] (> [V1]), it is possible to prevent the splash of the dispensing liquid L in the dispensing container S and further reduce a size of the droplet Ld remained at the opening end 10a of the probe 10 to improve dispensing accuracy while accelerating the dispensing operation. Also, since it is possible to prevent poor cleaning of the dispensing container S, it is possible to improve dispensing accuracy and to improve analysis accuracy in automatic analysis to be described later.

### << Second Embodiment >>

Next, a configuration of a dispensing mechanism 2 according to a second embodiment is described with reference to Fig. 1 above. The dispensing mechanism 2 of the second embodiment is different from a dispensing mechanism 1 of a first embodiment only in a configuration of an opening/closing valve 37' provided in a piping system 30' and a procedure of dispensing operation by a drive control unit 50'; other configuration is similar to that of the first embodiment. Therefore, each component is assigned with the same reference sign, and only the configuration of the opening/closing valve 37' of the piping system 30' and the dispensing operation by the drive control unit 50' are described below; the overlapping description is not repeated.

### <Piping System 30'>

The piping system 30' is provided with a discharge pipe 31, a suction pipe 33, a common pipe 35, and the opening/closing valve 37'. Among them, only the opening/closing valve 37' is different from that of the first embodiment. That is, the opening/closing valve 37' being an electromagnetic valve configured as a three-way valve, for example, makes the discharge pipe 31 a normally opened pipe which is always opened and makes the suction pipe 33 a normally closed pipe which is always blocked. Therefore, in a non-energized state, the opening/closing valve 37' opens the discharge pipe 31 to open communication between the pump 20 and the probe 10 and closes the suction pipe 33 to block the communication between the supply bottle B and the pump 20.

### <Drive Control Unit 50'>

The drive control unit 50' is connected to a moving mechanism 11 provided on the probe 10, a driving unit 21 of the pump 20, the opening/closing valve 37' of the piping system 30', and the heater 40, and controls drive thereof as in the first embodiment. In addition, as in the first embodiment, such drive control unit 50' is provided with a central processing unit (CPU), a random access memory (RAM), and a read only memory (ROM) not herein illustrated and controls the drive of each unit according to a processing program of dispensing operation for an automatic analyzer set in advance. Details of the dispensing operation executed by such drive control unit 50' are as follows.

### <Dispensing Operation>

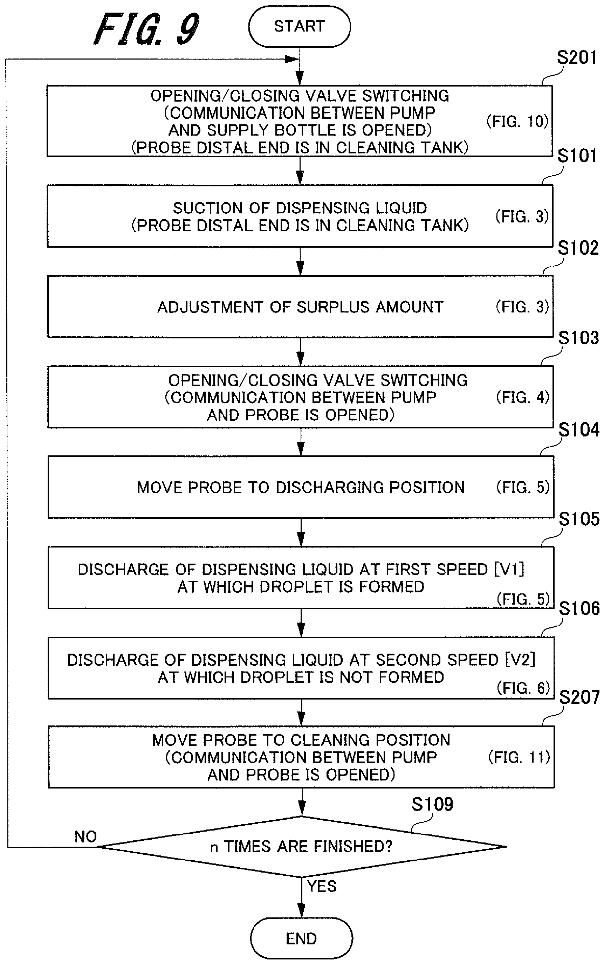

Fig. 9 is a flow chart for illustrating the dispensing operation in the dispensing mechanism 2 according to the second embodiment; the same step as that in the dispensing operation in the dispensing mechanism 1 of the first embodiment is assigned with the same reference sign. Hereinafter, a procedure of the dispensing operation performed in the dispensing mechanism 2 is described according to a flowchart of Fig. 9 and with reference to other necessary drawings. This flow is realized by the CPU forming the drive control unit 50' executing the program recorded in the ROM.

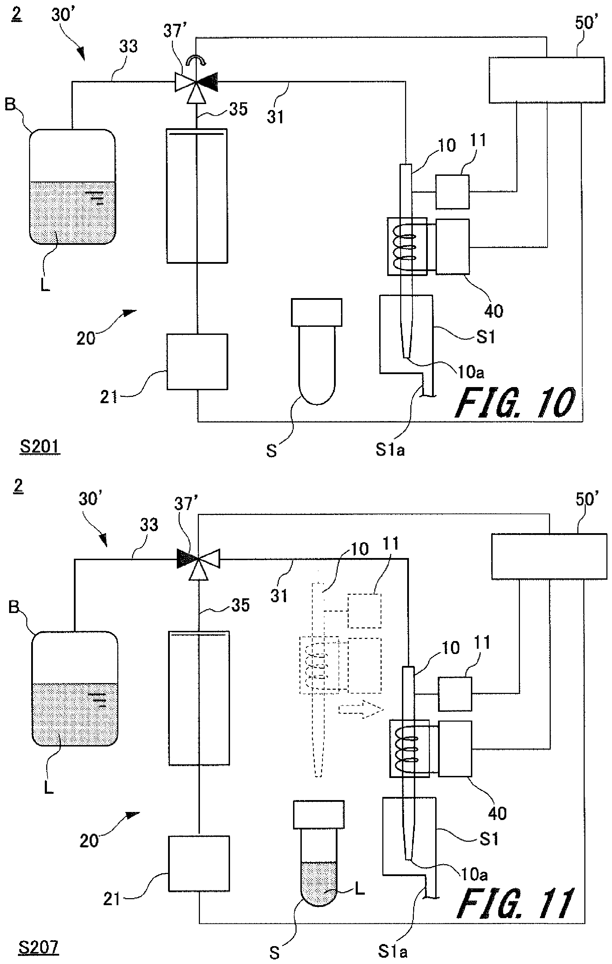

### [Step S201 (Refer to Fig. 10)]

First, at step S201, by switching the opening/closing valve 37', the discharge pipe 31 is closed and the communication between the pump 20 and the probe 10 is blocked. As a result, the suction pipe 33 is opened to open the communication between the pump 20 and the supply bottle B.

At that time, at a time when previous dispensing operation is finished, the probe 10 is arranged at a cleaning position by driving the moving mechanism 11, more specifically, an opening end 10a of the probe 10 is inserted into a cleaning tank S1. In addition, in the piping system 30', the discharge pipe 31 is opened and the communication between the pump 20 and the probe 10 is opened, and the suction pipe 33 is closed and the communication between the pump 20 and the supply bottle B is blocked.

In such a state, by switching the opening/closing valve 37' as described above, the discharge pipe 31 is closed to block the communication between the pump 20 and the probe 10, and the suction pipe 33 is opened to open the communication between the pump 20 and the supply bottle B.

### [Steps S101 to S106 (Refer to Figs. 3 to 6)]

After that, steps S101 to S106 described in the first embodiment are carried out in the similar procedure.

That is, as illustrated in Fig. 3, at step S101, a dispensing liquid L is sucked from the supply bottle B of the dispensing liquid L to the pump 20, and at subsequent step S102, a surplus amount of the dispensing liquid L is adjusted. Thereafter, as illustrated in Fig. 4, at step S103, by switching the opening/closing valve 37', the communication between the pump 20 and the probe 10 is opened and the communication between the pump 20 and the supply bottle B is blocked.

Next, as illustrated in Fig. 5, at step S104, the probe 10 is moved from the cleaning position to the discharging position of the dispensing liquid L by driving the moving mechanism 11. At subsequent step S105, the dispensing liquid L in the pump 20 is discharged into a dispensing container S from the opening end 10a of the probe 10 at an initial discharging speed [V1] at which a droplet Ld of the dispensing liquid L is formed at the opening end 10a of the probe 10 by discharge drive of the pump 20.

Next, as illustrated in Fig. 6, at step S106, the dispensing liquid L in the pump 20 is discharged into the dispensing container S from the opening end 10a of the probe 10 at a later discharging speed [V2] (> [V1]) at which a liquid column Lp of the dispensing liquid L is formed at the opening end 10a of the probe 10 by the discharge drive of the pump 20.

### [Step S207 (Refer to Fig. 11)]

Thereafter, at step S207, the probe 10 is moved from the discharging position of the dispensing liquid L to the cleaning position by driving the moving mechanism 11. More specifically, the probe 10 is moved from the discharging position above the dispensing container S and the opening end 10a is inserted into the cleaning tank S1 in a state in which the communication between the pump 20 and the probe 10 is opened and the communication between the pump 20 and the supply bottle B is blocked.

### [Step S109]

At subsequent step S109, as in the first embodiment, it is determined whether preset n times of dispensing are finished, and in a case where it is determined that n times of dispensing are finished (YES), a series of dispensing operations is finished. On the other hand, in a case where it is determined that n times of dispensing are not finished (NO), the procedure returns to step S201 and subsequent steps are repeated. Meanwhile, in this repetition, operation of exchanging the dispensing container S arranged at the discharging position with a new dispensing container S is performed.

### <Effect of Second Embodiment>

In the second embodiment also, the discharge drive of the pump 20 in single dispensing operation is divided into an initial stage at the discharging speed [V1] and a later stage at the discharging speed [V2] (> [V1]), so that it is possible to obtain the effect similar to that in the first embodiment. Furthermore, in the second embodiment, as described with reference to Fig. 11, at step S207 after finishing the discharge of the dispensing liquid at step S106, the probe 10 is moved into the cleaning tank S1 without switching the opening/closing valve 37'. Therefore, even in a case where the droplet of the dispensing liquid L drops from the opening end 10a of the probe 10 due to impact caused by switching of the opening/closing valve 37' after the dispensing operation is finished, the droplets does not drop into the dispensing container S. Therefore, it is possible to prevent variation in a supply amount of the dispensing liquid L in the dispensing container S, and it is possible to improve dispensing accuracy.

### << Variation of Dispensing Mechanism >>

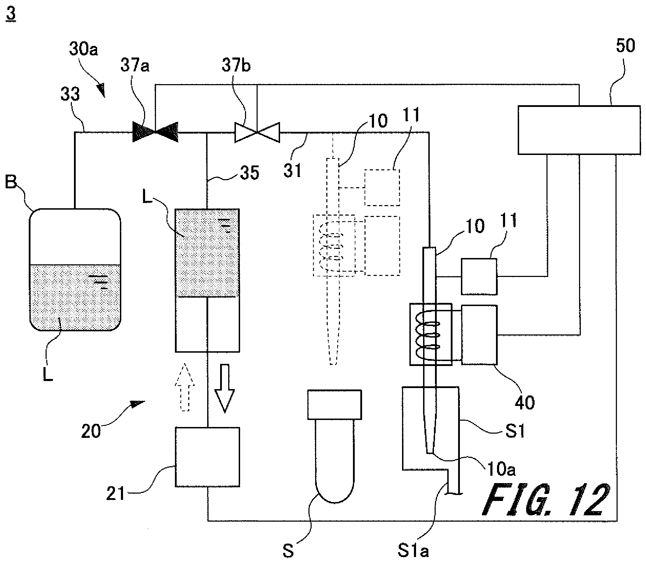

Fig. 12 is a view illustrating a configuration of a dispensing mechanism 3 as a variation of the above-described first embodiment. The dispensing mechanism 3 illustrated in this drawing differs from the dispensing mechanism of the first embodiment in that opening/closing valves 37a and 37b provided in a piping system 30a are two-way valves provided on each of a discharge pipe 31 and a suction pipe 33. Dispensing operation performed by a drive control unit 50 may be similar to that in the first embodiment except that drive of each of the two opening/closing valves 37a and 37b is controlled. With a configuration of such variation also, the effect similar to that in the first embodiment may be obtained.

Meanwhile, this variation may be combined also with the second embodiment, and in this case, the opening/closing valve 37' provided in the piping system 30' of the dispensing mechanism 2 described in the second embodiment may be made a two-way valve; in such a configuration also, the effect similar to that in the second embodiment may be obtained.

### << Entire Configuration of Automatic Analyzer >>

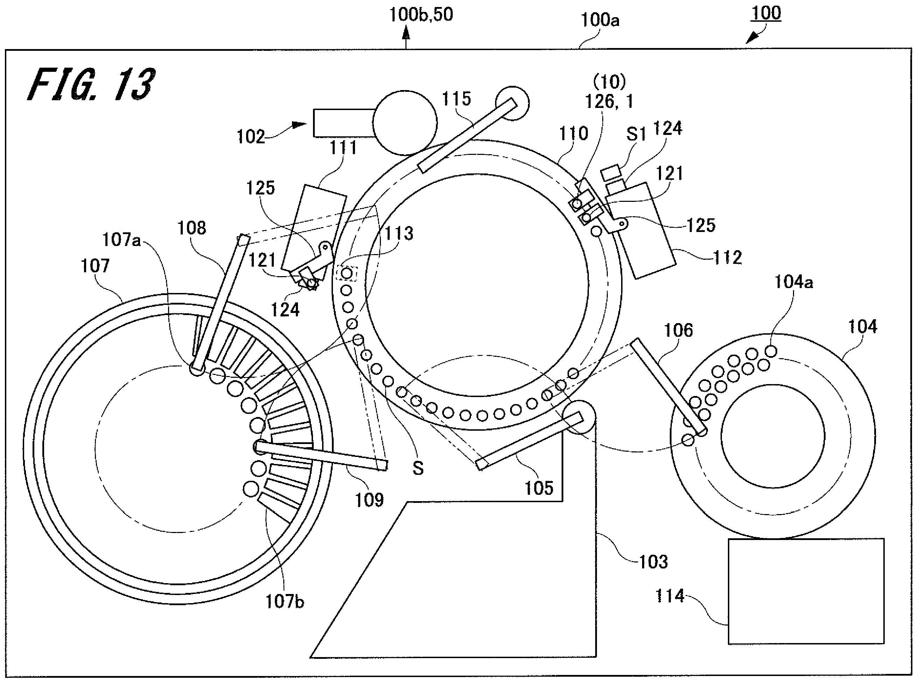

Next, a configuration of an automatic analyzer 100 to which the present invention is applied is described with reference to Fig. 13. The automatic analyzer 100 illustrated in this drawing is configured using the above-described dispensing mechanism 1, and herein, as an example, it is described to continuously perform immune analysis applying a chemiluminescent enzyme immunoassay (CLEIA) to a plurality of specimens.

As a main step, CLEIA includes a reaction step of reacting a specimen (antigen or antibody) with a reagent in a reaction container, a separation step of separating a reaction product (bound) and an unreacted substance (free) in the reaction container (BF separation), and a photometry step of measuring an amount of luminescence generated from an immune complex generated by reaction of each reagent and the specimen.

The automatic analyzer 100 for performing such immune analysis is provided with an automatic measurement unit 100a provided with the dispensing mechanism 1 and a control device 100b which controls an entire automatic measurement unit 100a and analyzes measurement data output from the automatic measurement unit 100a. Hereinafter, a configuration of the automatic measurement unit 100a provided with the dispensing mechanism 1 is first described, and then the control device 100b is described.

### <Automatic Measurement Unit 100a>

The automatic measurement unit 100a is provided with a luminescence measurement device 102, a reaction container supply unit 103, a specimen installation unit 104, a reaction container conveyance unit 105, a specimen dispensing unit 106, a reagent cooling unit 107, a first reagent dispensing unit 108, a second reagent dispensing unit 109, an immune enzyme reaction unit 110, a first BF separation unit 111, a second BF separation unit 112, a substrate solution cooler 114, and a container transfer arm 115.

The luminescence measurement device 102 is a device used for quantifying a specimen (antigen or antibody) to which CLEIA is applied, and is a device for measuring luminescence intensity of a chemiluminescence phenomenon generated in a reaction container S. The luminescence measurement device 102 is arranged close to the immune enzyme reaction unit 110.

The reaction container supply unit 103 accommodates a plurality of reaction containers S and supplies the plurality of reaction containers S one by one to a transfer position in the reaction container supply unit 103. The reaction container S supplied to the transfer position is conveyed to the immune enzyme reaction unit 110 by the reaction container conveyance unit 105. The specimen and a predetermined reagent are injected into the reaction container S conveyed to the immune enzyme reaction unit 110.

The specimen installation unit 104 is provided with a turn table formed into a container shape having a substantially cylindrical shape with one end in an axial direction opened. In this specimen installation unit 104, a plurality of specimen containers 104a is accommodated. In the specimen container 104a, a specimen (sample) being blood, urine or the like collected from a subject is accommodated. A plurality of specimen containers 104a is arranged side by side at a predetermined interval in a circumferential direction of the specimen installation unit 104. The specimen installation unit 104 is supported so as to be rotatable in the circumferential direction by a driving mechanism not illustrated. Then, the specimen installation unit 104 rotates at a predetermined speed by a predetermined angular range in the circumferential direction by the driving mechanism not illustrated. In the example of Fig. 13, two lines of the specimen containers 104a arranged in the circumferential direction of the specimen installation unit 104 are provided at a predetermined interval in a radial direction of the specimen installation unit 104. Meanwhile, as the specimen, a specimen diluted with a predetermined dilute solution may also be used.

The reaction container conveyance unit 105 is provided with an arm which freely moves up and down in a vertical direction and rotates about a vertical line passing through a base end thereof as a central axis, and a holding unit provided at a distal end of the arm. The reaction container conveyance unit 105 holds the reaction container S supplied to a supply position of the reaction container supply unit 103 by the holding unit, turns the arm, and conveys the same to a predetermined position of the immune enzyme reaction unit 110 at a predetermined timing.

The specimen dispensing unit 106 is provided with an arm which freely moves up and down in a vertical direction and rotates about a vertical line passing through a base end thereof as a central axis, and a probe provided at a distal end of the arm. The specimen dispensing unit 106 sucks the specimen in the specimen container 104a moved to a predetermined position of the specimen installation unit 104 with the probe, turns the arm, and dispenses the same into the reaction container S in a predetermined position of the immune enzyme reaction unit 110 at a predetermined timing.

The reagent cooling unit 107 is provided with a turn table formed into a container shape having a substantially cylindrical shape with one end in an axial direction opened as is the case with the specimen installation unit 104. The reagent cooling unit 107 is rotatably supported in a circumferential direction by a driving mechanism not illustrated and rotates in a normal direction or an opposite direction at a predetermined speed by a predetermined angular range in the circumferential direction by the driving mechanism not illustrated.

In the reagent cooling unit 107, a first reagent container 107a and a second reagent container 107b are accommodated. The first reagent container 107a and the second reagent container 107b are arranged side by side at a predetermined interval in the circumferential direction of the reagent cooling unit 107. In the first reagent container 107a, as a first reagent, a magnetic reagent formed of magnetic particles which reacts with a target antigen in the specimen is accommodated. Also, in the second reagent container 107b, as a second reagent, a labeling reagent (enzyme antibody) which react with a reaction product obtained by binding the antigen in the specimen and the magnetic reagent is accommodated. The interior of the reagent cooling unit 107 is kept at predetermined temperature by a cooling mechanism not illustrated. Therefore, the first reagent (magnetic reagent) accommodated in the first reagent container 107a and the second reagent (labeling reagent) accommodated in the second reagent container 107b are cooled at predetermined temperature.

In the immune enzyme reaction unit 110, an immune reaction between a specimen and a predetermined reagent corresponding to an analytical item and an enzyme reaction caused by the immune complex generated by this immune reaction and a chemiluminescent substrate are performed in the reaction container S arranged in a circumferential direction. The immune enzyme reaction unit 110 is provided with a turn table formed into a container shape having a substantially cylindrical shape with one end in an axial direction opened as is the case with the specimen installation unit 104. The immune enzyme reaction unit 110 is rotatably supported in the circumferential direction by a driving mechanism not illustrated and rotates at a predetermined speed by a predetermined angular range in the circumferential direction by the driving mechanism not illustrated. Herein, the immune enzyme reaction unit 110 rotates counterclockwise. In the example of Fig. 13, one line of the reaction container S arranged in the circumferential direction of the immune enzyme reaction unit 110 is set at a predetermined interval in a radial direction of the immune enzyme reaction unit 110; however, a line of the reaction containers S for the first reagent and a line of the reaction containers S for the second reagent to be described later may be provided at a predetermined interval in the radial direction.

When the magnetic reagent is dispensed by the first reagent dispensing unit 108 into the reaction container S into which the specimen is injected, the immune enzyme reaction unit 110 stirs a mixed solution of the magnetic reagent and the specimen by a stirring mechanism not illustrated and allows immune reaction of the antigen in the specimen and the magnetic reagent for a certain period of time (primary immune reaction). Next, the immune enzyme reaction unit 110 moves the reaction container S to a first magnetism collecting mechanism (magnet 113), and magnetically collects the reaction product obtained by binding the antigen and the magnetic reagent by magnetic force. Then, in this state, the interior of the reaction container S is cleaned, and an unreacted substance which does not react with the magnetic reagent is removed (primary BF separation).

The first magnetism collecting mechanism is fixed at a position corresponding to the first BF separation unit 111 arranged in the vicinity of an outer periphery of the immune enzyme reaction unit 110. The turn table of the immune enzyme reaction unit 110 is formed of two layers: a fixed lower layer and a rotatable upper layer. The magnet 113 is arranged on the lower turn table as the first magnetism collecting mechanism, and the reaction container S is arranged on the upper turn table. The magnet 113 magnetically collects the reaction products in the reaction container S.

The first BF separation unit 111 is provided with an arm 125, a nozzle 121 attached to the arm 125, and a BF nozzle cleaning tank 124. The arm 125 freely moves up and down in the vertical direction and rotates around a vertical line passing through a base end thereof as a central axis. The arm 125 moves the nozzle 121 to the reaction container S in a primary BF separation position of the immune enzyme reaction unit 110 and to the BF nozzle cleaning tank 124 at a nozzle cleaning position on a side of the first BF separation unit 111. In the primary BF separation position, the nozzle 121 discharges a cleaning solution into the reaction container S into which the specimen and the magnetic reagent are injected and sucks the same therefrom to clean, thereby removing the unreacted substance which does not react with the magnetic reagent (BF cleaning).

When the reaction container S is conveyed to the primary BF separation position, the first BF separation unit 111 performs the primary BF separation. By the primary BF separation and the BF cleaning, the reaction product obtained by binding the target antigen in the specimen and the magnetic reagent is magnetically collected in the reaction container S. When the primary BF separation ends, the arm 125 moves the nozzle 121 to the nozzle cleaning position where the BF nozzle cleaning tank 124 is located.

After the primary BF separation ends, when the labelling reagent is dispensed by the second reagent dispensing unit 109 into the reaction container S in which the reaction product remains, the immune enzyme reaction unit 110 stirs a mixed solution of the magnetic reagent and the specimen by a stirring mechanism not illustrated and allows immune reaction of the reaction product and the labeling reagent for a certain period of time (secondary immune reaction). Next, the immune enzyme reaction unit 110 moves the reaction container S to a second magnetism collecting mechanism not illustrated, and magnetically collects an immune complex obtained by binding the reaction product and the labelling reagent by magnetic force. Then, in this state, the interior of the reaction container S is cleaned, and an unreacted substance which does not react with the magnetic reagent is removed (secondary BF separation).

The second magnetism collecting mechanism including a magnet similar to the magnet 113 of the first magnetism collecting mechanism is fixed at a position corresponding to the second BF separation unit 112 arranged in the vicinity of the outer periphery of the immune enzyme reaction unit 110. In the example of Fig. 13, the magnet included in the second magnetism collecting mechanism is arranged below the nozzle 121 at a secondary BF separation position.

The second BF separation unit 112 has the configuration similar to that of the first BF separation unit 111 and is arranged at a predetermined distance in the circumferential direction from the first BF separation unit 111. The arm 125 freely moves up and down in the vertical direction and rotates around a vertical line passing through a base end thereof as a central axis. The arm 125 moves the nozzle 121 to the reaction container S in a secondary BF separation position of the immune enzyme reaction unit 110 and to the BF nozzle cleaning tank 124 at a nozzle cleaning position on a side of the second BF separation unit 112. In the secondary BF separation position, the nozzle 121 discharges the cleaning solution into the reaction container S into which the labelling reagent is injected and sucks the same therefrom to clean, thereby removing a surplus unreacted substance which does not react with the labelling reagent (BF cleaning).

When the reaction container S is conveyed to the secondary BF separation position, the second BF separation unit 112 performs the secondary BF separation. By the secondary BF separation and the BF cleaning, the immune complex obtained by binding the reaction product including the target antigen in the specimen and the magnetic reagent and the labeling reagent is magnetically collected in the reaction container S. When the secondary BF separation ends, the arm 125 moves the nozzle 121 to the nozzle cleaning position where the BF nozzle cleaning tank 124 is located. Also, in the vicinity of the BF nozzle cleaning tank 124, a cleaning tank S1 which cleans the probe 10 of the substrate solution dispensing unit 126 to be described later or becomes a standby position of the probe 10 is arranged.

A substrate solution dispensing unit 126 is further attached to the arm 125 of the second BF separation unit 112. The substrate solution dispensing unit 126 is arranged at a position farther from a rotation axis of the arm 125 than the nozzle 121. As the substrate solution dispensing unit 126, the dispensing mechanism 1 of the above-described first embodiment, or the dispensing mechanism of another embodiment or the variation is used.

The substrate solution dispensing unit 126 is connected to the substrate solution cooler 114 which accommodates and cools a substrate solution via a tube not illustrated. The substrate solution dispensing unit 126 dispenses the substrate solution containing a chemiluminescent substrate which specifically reacts with the labeling reagent for the immune complex obtained by binding the magnetic reagent, the antigen, and the labeling reagent (enzyme antibody) into the reaction container S after the secondary BF separation. Then, the reaction container S into which the substrate solution is injected is conveyed to a predetermined position by rotation of the immune enzyme reaction unit 110. The reaction container S conveyed to a predetermined position is transferred to the luminescence measurement device 102 by the container transfer arm 115. Herein, this reaction container S serves as the dispensing container S.

### <Control Device 100b>

The control device 100b controls the operation of each unit of the automatic measurement unit 100a including the dispensing mechanism 1 and performs data processing of measurement data output from a light detector of the luminescence measurement device 102. Such control device 100b is provided with an input/output processing unit, an input unit, an analysis unit, a storage unit, an output unit, a communication interface and the like to which each unit of the automatic measurement unit 100a is connected in addition to each component of the dispensing mechanism 1 described above.

In the automatic analyzer 100, the drive control unit 50 (refer to Fig. 1) of the dispensing mechanism 1 described above is provided in the control device 100b. Then, in the drive control unit 50 of the control device 100b, drive of each unit of the dispensing mechanism 1 described above is controlled.

### <Effect of Automatic Analyzer 100>

According to the automatic analyzer 100 described above, the dispensing operation of the substrate solution into the reaction container S is performed using the dispensing mechanism 1. Therefore, it is possible to speed up the dispensing operation while preventing the splash of the substrate solution (that is, the dispensing liquid L) in the reaction container S during the dispensing operation of the substrate solution into the reaction container S. Since the splash of the substrate solution in the reaction container S is prevented, it is possible to make the entire amount of the substrate solution dispensed into the reaction container S react with the specimen, and it is possible to improve the analysis accuracy. In addition, it is also possible to increase an analysis speed by increasing the speed of single dispensing operation.

Meanwhile, in the automatic analyzer 100 described above, the configuration in which the dispensing mechanism 1 of the first embodiment is applied to the substrate solution dispensing unit 126 is described. However, the dispensing mechanism 1 of the first embodiment and the dispensing mechanism of another embodiment and the variation may also be applied to the specimen dispensing unit 106, the first reagent dispensing unit 108, and the second reagent dispensing unit 109. However, by applying the dispensing mechanism of the embodiment and the variation to the dispensing unit which dispenses the dispensing liquid in a liquid state into the dispensing container (herein, the reaction container S) in which no content is accommodated or only a solid matter is accommodated, the above-described effect is sufficiently exerted.

### Reference Signs List

- 1, 2, 3: Dispensing mechanism
- 10: Probe
- 10a: Opening end
- 11: Moving mechanism
- 20: Pump
- 31: Discharge pipe
- 33: Suction pipe
- 37, 37', 37a, 37b: Opening/closing valve
- 40: Heater
- 50, 50': Drive control unit
- 100: Automatic analyzer
- L: Dispensing liquid
- Ld: Droplet
- Lp: Liquid column
- S: Dispensing container
- S1: Cleaning tank
- V1: Initial discharging speed
- V2: Discharging speed

## Claims

1. An automatic analyzer comprising:
a probe provided with an opening end for discharging a dispensing liquid;
a pump connected to a side opposite to the opening end of the probe; and
a dispensing mechanism provided with a drive control unit which controls drive of the pump,
wherein the drive control unit controls the drive of the pump to realize a discharging speed at which a droplet of the dispensing liquid is formed at the opening end of the probe at an initial stage of discharge drive and a discharging speed at which a liquid column of the dispensing liquid is formed at the opening end of the probe at a later stage of the discharge drive at the time of the discharge drive of the pump to discharge a predetermined amount of dispensing liquid into a dispensing container from the opening end of the probe.

2. The automatic analyzer according to claim 1,
wherein the drive control unit controls the drive of the pump such that an initial discharge amount of the discharge drive becomes equal to or larger than a later discharge amount of the discharge drive at the time of the discharge drive of the pump.

3. The automatic analyzer according to claim 1,
wherein the drive control unit controls the drive of the pump such that an initial discharge amount of the discharge drive becomes smaller than a later discharge amount of the discharge drive at the time of the discharge drive of the pump.

4. The automatic analyzer according to any one of claims 1 to 3, comprising:
a discharge pipe having one end connected to the pump and the other end connected to the probe;
a suction pipe having one end connected to the pump and the other end connected to a supply bottle of the dispensing liquid; and
an opening/closing valve which switches an open state of the discharge pipe and the suction pipe according to the control by the drive control unit,
wherein the opening/closing valve is an electromagnetic valve which closes the suction pipe and opens the discharge pipe in a non-energized state.

5. The automatic analyzer according to claim 4,
wherein the drive control unit controls drive of the opening/closing valve so as to finish dispensing operation while maintaining the open state of the discharge pipe after finishing the discharge drive of the pump.

6. The automatic analyzer according to claim 5, comprising:
a moving mechanism which moves the probe between a discharging position of the dispensing liquid and a cleaning position of the probe according to the control by the drive control unit,
wherein the drive control unit controls the moving mechanism so as to move the probe from the discharging position of the dispensing liquid to the cleaning position of the probe in a state in which the open state of the discharge pipe is maintained after the discharge drive of the pump is finished.

7. The automatic analyzer according to any one of claims 1 to 6,
wherein the probe is provided with a heater.

8. An automatic analyzing method using an automatic analyzer provided with a probe provided with an opening end for discharging a dispensing liquid and a pump connected to a side opposite to the opening end of the probe,
the method which realizes a discharging speed at which a droplet of the dispensing liquid is formed at the opening end of the probe at an initial stage of discharge drive and a discharging speed at which a liquid column of the dispensing liquid is formed at the opening end of the probe at a later stage of the discharge drive at the time of the discharge drive of the pump to discharge a predetermined amount of dispensing liquid into a dispensing container from the opening end of the probe.

9. The automatic analyzing method according to claim 8,
wherein the automatic analyzer is provided with a discharge pipe having one end connected to the pump and the other end connected to the probe, a suction pipe having one end connected to the pump and the other end connected to a supply bottle of a dispensing liquid, and an opening/closing valve which switches an open state of the discharge pipe and the suction pipe,
and finishes dispensing operation while maintaining the open state of the discharge pipe by drive of the opening/closing valve after finishing the discharge drive of the pump.

10. The automatic analyzing method according to claim 9,
wherein the automatic analyzer is provided with a moving mechanism which moves the probe between a discharging position of the dispensing liquid and a cleaning position of the probe, and
moves the probe from the discharging position of the dispensing liquid to the cleaning position of the probe in a state in which the open state of the discharge pipe is maintained by the moving mechanism after the discharge drive of the pump is finished.

11. The automatic analyzing method according to claim 10, comprising:
closing the discharge pipe and opening the suction pipe by the opening/closing valve;
sucking the dispensing liquid to the pump by suction drive of the pump;
then opening the discharge pipe and closing the suction pipe by the opening/closing valve; and
thereafter moving the probe to the discharging position of the dispensing liquid by the moving mechanism before the discharge drive of the pump is started.
